(19) Europäisches Patentamt
European Patent Office
Office européen des brevets

(11) EP 0 630 775 B1

(12) EUROPÄISCHE PATENTSCHRIFT

(45) Veröffentlichungstag und Bekanntmachung des Hinweises auf die Patenterteilung:
07.05.1997 Patentblatt 1997/19

(51) Int. Cl.$^6$: B60J 5/04

(21) Anmeldenummer: 94108914.6

(22) Anmeldetag: 10.06.1994

(54) **Fahrzeugtür**

Vehicle door

Porte de véhicule

(84) Benannte Vertragsstaaten:
AT CH DE ES FR GB IT LI PT SE

(30) Priorität: 26.06.1993 DE 4321282

(43) Veröffentlichungstag der Anmeldung:
28.12.1994 Patentblatt 1994/52

(73) Patentinhaber: VAW Aluminium AG
D-53117 Bonn (DE)

(72) Erfinder:
• Ebert, Jörg, Dr. Ing.
D-50858 Köln (DE)
• Griep, Winfried
D-53225 Bonn (DE)
• Hellenkamp, Michael, Dipl.-Ing.
D-50389 Wesseling (DE)
• Findeisen, Volker, Dipl.-Ing.
D-44791 Bochum (DE)
• Gommon, Volker, Dipl.-Ing.
D-70565 Stuttgart (DE)

(74) Vertreter: Müller-Wolff, Thomas, Dipl.-Ing. et al
HARWARDT NEUMANN
Patent- und Rechtsanwälte,
Brandstrasse 10
53721 Siegburg (DE)

(56) Entgegenhaltungen:
EP-A- 0 222 990          EP-A- 0 492 355
FR-A- 2 257 450          US-A- 5 056 264

• AUTOMOTIVE ENGINEERING, Bd.101, Nr.5, Mai 1993 WARRENDALE,PA,US 'DESIGN OF A MAGNESIUM/ALUMINIUM DOOR FRAME'

## Beschreibung

Die Erfindung betrifft eine Fahrzeugtür in Zweischalenbauweise, bestehend aus einer Außenschale 1, die flächenbündig mit den übrigen Karosserieteilen im Türrahmenbereich abschließbar ist, einer Innenschale 2, an der eine Innenverkleidung befestigt ist und die mit der Außenschale in der Fahrzeugmontage form- und/oder kraftschlüssig verbunden wird und den für die Tür- bzw. Fensterbedienung erforderlichen Türkomponenten, die in den Türinnenraum, gebildet zwischen Außen- und Innenschale, untergebracht sind, wobei die Außenschale aus selbsttragenden teilweise doppelwandigen oder vollständig doppelwandigen, an den Schmalseiten offenen Profilabschnitten (1a, b) besteht, in die die Türscharniere und das Türschloß befestigbar sind.

Aus der FR-A-22 57 450 ist eine Fahrzeugtür der eingangs genannten Art bekannt. Zur Versteifung wird der Zwischenraum der doppelwandigen Außenschale mit einer Kunststoffmasse ausgespritzt. Über die Befestigung der Tür- bzw. Fensterkomponenten sind der FR-A-22 57 450 keine konkreten Hinweise zu entnehmen.

Ferner ist aus der DE-U-17 04 268 eine Fahrzeugtür, insbesondere für Kraftfahrzeuge bekannt, bei der ein aus Leichtmetallguß hergestellter Türrahmen mit einer äußeren Verkleidung aus Leichtmetallblech, Stahlblech, Kunststoff oder dergleichen versehen ist. Der Türrahmen kann zu einer Innenschale vervollständigt werden, an der Befestigungsschienen, Beschlagteile und Fensterführungsteile angeordnet sind, so daß die Innenschale damit als Funktionsträger ausgebildet ist. Auf seiner Außenseite ist der gesamte Türrahmen mit einer aus mehreren Leichtmetall- oder Stahlblechpreßteilen bestehenden Außenhaut verkleidet, deren Ränder zur Befestigung an dem Türrahmen um die äußeren Flansche der Rahmenteile herumgebördelt sind. Dadurch wird ein flächiger Abschluß an den Türrahmenrändern erreicht.

Bei der Fertigung werden aus den Blechteilen zunächst die Fahrzeugtüren vormontiert, dann lackiert und danach wieder demontiert, um die Türkomponenten in die mehrschalige Tür einbauen zu können. Dies ist nur mit einem beachtlichen Kostenaufwand möglich. Sobald eines der vorgefertigten Teile beschädigt ist oder nicht den erforderlichen Qualitätsmerkmalen entspricht, wird die gesamte Rohbautür aus der Fertigung genommen.

Da die Preßwerkzeuge zum Umformen der Blechplatinen verhältnismäßig teuer sind und auch meistens mehrere Umformwerkzeuge für eine Tür benötigt werden, lassen sich konventionelle Blechtüren nur bei sehr großen Stückzahlen wirtschaftlich fertigen.

Aufgabe der vorliegenden Erfindung ist es daher, eine Fahrzeugtür der eingangs genannten Art so weiter zu bilden, daß die Anzahl der erforderlichen Einzelteile verringert und eine kostengünstige Fertigung auch bei geringen Stückzahlen ermöglicht wird. Gleichzeitig soll die Insassensicherheit, die Reparaturfreundlichkeit und die Einstellbarkeit der neuen Fahrzeugtür verbessert werden.

Diese Aufgabe wird durch die in den Patentansprüchen angegebenen Merkmale gelöst. Ein wesentliches Merkmal der Erfindung besteht darin, daß die Sicherheits- und Schutzfunktionen der Tür von der Komponentenaufnahmefunktion getrennt wurde. Die Sicherheits- und Schutzfunktion liegt nunmehr allein in der Außenschale, während die Innenschale als komponententragend zur Vormontage von sämtlichen Aggregaten ausgebildet ist. Diese Funktionstrennung ermöglicht die Integration der Aufpralleigenschaften innerhalb eines Bauelementes, eine Kostenersparnis in der Fertigung durch eine zeitliche und räumliche Trennung der Vormontage von Außenschale und Innenschale sowie eine leichte Austauschbarkeit einzelner Komponenten bei der nachträglichen Montage/Demontage, was wiederum die Eignung für das Recyceln wiederverwendbarer Komponenten verbessert.

Grundsätzlich ist es möglich, die Profilabschnitte aus Kunststoff oder Metall nach verschiedenen, bekannten Fertigungsverfahren herzustellen. Es ist nur wichtig, daß dabei ein selbsttragendes formstabiles und steifes Türsegment entsteht, welches die Sicherheitsfunktion ohne zusätzliche Türaufprallträger übernehmen kann, aber gleichzeitig die zulässigen Gewichtsgrenzen nicht überschreitet. Daher sind auch Kunststoffmaterialien, Verbundwerkstoffe und Sandwich-Platten für diesen Zweck verwendbar.

Es hat sich gezeigt, daß die Verwendung von in Fahrzeuglängsrichtung verlaufenden Integralprofilen besondere Vorteile bringt, in deren doppelwandigen, an den Schmalseiten offenen Querschnitten Schraubkanäle und hinterschnittene Nuten zur Befestigung der als Funktionsträger ausgebildeten Innenschale vorgesehen sind.

Die Verwendung von Aluminiumlegierungen für die Herstellung der Profilabschnitte bietet den Vorteil, daß sich diese optimal als Strangpreßprofil mit beliebiger Außenkontur einsetzen lassen, wobei die Werkstoffeigenschaften des Aluminiums im Türbereich genutzt werden können. Diese bestehen in einem günstigen Verhältnis von Festigkeit, Dehnungswerten und Formänderungsvermögen, das insbesondere im Crash-Falle zu einem im Vergleich zu anderen Werkstoffen erhöhten Sicherheitspotential führt. Ferner kann der Werkstoff Aluminium artgleich bei anderen Türkomponenten verwendet werden, so daß die Wiederverwendung von Schrottmaterialien erleichtert wird.

Auch der Werkstoff für die Innenschale der Fahrzeugtür kann im Prinzip frei gewählt werden, sofern dabei sichergestellt wird, daß die Festigkeit für die Funktion eines Trägers der Türkomponenten gewahrt bleibt. Hierzu gehört die Befestigung des Scheibenrahmens sowie folgende Türkomponenten, die üblicherweise im Zwischenraum zwischen Innenschale und Außenschale einer Fahrzeugtür untergebracht sind: Fensterführungsschienen, Fensterkurbel, Fenstergetriebe, Servomotoren, Servogetriebe, Lautsprecher, Scheibe u.s.w..

Aufgrund zahlreicher Versuche wurde festgestellt, daß die Innenschale nach einer Weiterbildung der Erfindung besonders günstig als Druckgußteil ausgebildet wird. Dadurch ist die Möglichkeit gegeben, die Kontur der Innenschale so zu gestalten, daß sie die räumlichen Verhältnisse zur Lehnenbefestigung, zur Anbringung der Türkomponenten und zur Abdeckung der an den Schmalseiten offenen Profilabschnitte optimal nutzt. Im Druckgußverfahren lassen sich auch Hinterschneidungen durchführen, die an großflächigen Konstruktionsteilen sonst problematisch sind.

Grundsätzlich ist die Anbindung der Innenschale an die Außenschale in verschiedener Weise möglich. So ist bei einem Profilabschnitt aus Sandwich-Elementen die Anbindung in Form von eingesenkten Gewindeteilen zweckmäßig, wobei auch das Fließbohrverfahren nutzbringend eingesetzt werden kann.

Die Befestigung der Innenschale erfolgt in hinterschnittenen Nuten bzw. in Schraubkanälen, die in den Strangpreßprofilabschnitten der Außenschale angeordnet sind. Auf diese Weise lassen sich gleichzeitig die Türscharniere in den hinterschnittenen Nuten der Außenschale über Nutensteine leicht positionieren, wobei mechanische Klemmelemente in der XY-Ebene der Tür für die Fixierung sorgen.

Wie aus herkömmlichen Türkonstruktionen bekannt, ist ein seitlicher Überstand der Türaußenfläche über das Türrahmenprofil aus verschiedenen Gründen zweckmäßig. In der Ausführung der Erfindung wird dieser seitliche Überstand derart ausgebildet, daß im Crash-Falle die Außenschale auch nach erheblicher Verformung im Türrahmenprofil verankert bleibt, so daß ein erhöhtes Sicherheitspotential für die Insassen gegeben ist.

In diesem Zusammenhang hat es sich als zweckmäßig erwiesen, daß die Strangpreßprofilabschnitte als Mehrkammerhohlprofile ausgebildet sind. Dadurch wird das Widerstandsmoment der Außenschale weiter erhöht, wobei insbesondere die in Fahrtrichtung verlaufenden, senkrecht zur Außenschale nach innen weisenden Stege wichtig sind.
Das Widerstandsmoment läßt sich näherungsweise bestimmen nach folgender Formel:

$$I = B \times S^3/12 : 12 + S \times B \times H^2,$$

wobei B die Höhe der Tür, S der Wandstärke der doppelwandigen Profilabschnitte und H der Tiefe des Türaußenprofils entspricht.

Ein Optimum zwischen den Anforderungen an die Festigkeit, der Herstellbarkeit und den Recyclingeigenschaften bietet die Aluminiumlegierung der 6000-Serie. Insbesondere lassen sich folgende Legierungsbestandteile der 6000-Serie in diesem Anwendungsfall besonders nutzen:

Zur Durchführung des Erfindungsgedankens ist vorgesehen, daß die Innenschale Randbereiche aufweist, die die Hohlkammeröffnungen der Außenschale seitlich verschließen. Damit kann eine komplette Fahrzeugtür allein aus den vormontierten Innen- und Außenschalen gebildet werden, ohne daß zusätzliche Abdeckungen, Verkleidungen oder Verstärkungsteile eingesetzt werden müssen.

Im folgenden wird die Erfindung anhand mehrerer Ausführungsbeispiele näher erläutert. Es zeigen:

Figur 1     Prinzipieller Aufbau einer mit einer erfindungsgemäßen Fahrzeugtür ausgerüsteten Kfz-Karosserie

Figur 2     Außenhaut einer erfindungsgemäßen Fahrzeugtür

Figur 3     Schnitt durch die Außenschale einer erfindungsgemäßen Fahrzeugtür

Figur 4     Seitenansicht einer erfindungsgemäßen Innenschale

Figur 5     Perspektivische Seitenansicht der Seitenschale mit Zubehörteilen

Figur 6     Prinzipieller Aufbau einer erfindungsgemäßen Innenschale

Figur 7     Seitenansicht einer verkleideten Fahrzeugtür ohne Zubehörteile

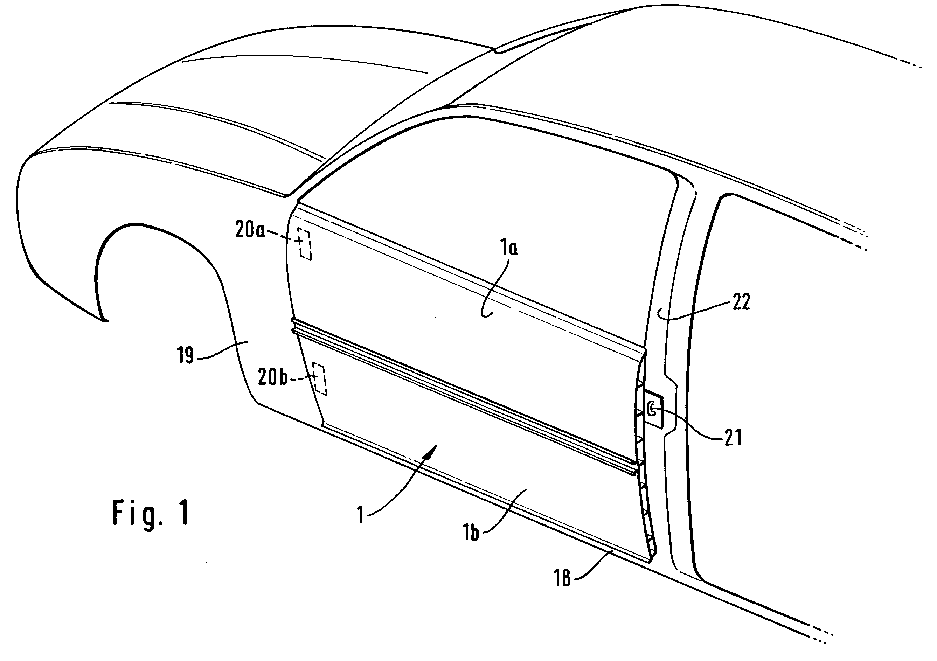

In Figur 1 ist die Außenschale bestehend aus zwei Profilabschnitten 1a, b im eingebauten Zustand als Prinzipbild dargestellt. Man erkennt die Türschaniere 20a, b sowie das Türschloß 21, die an der Außenschale 1 befestigt sind. Alle übrigen Funktionsteile sind an der Innenschale fixiert.

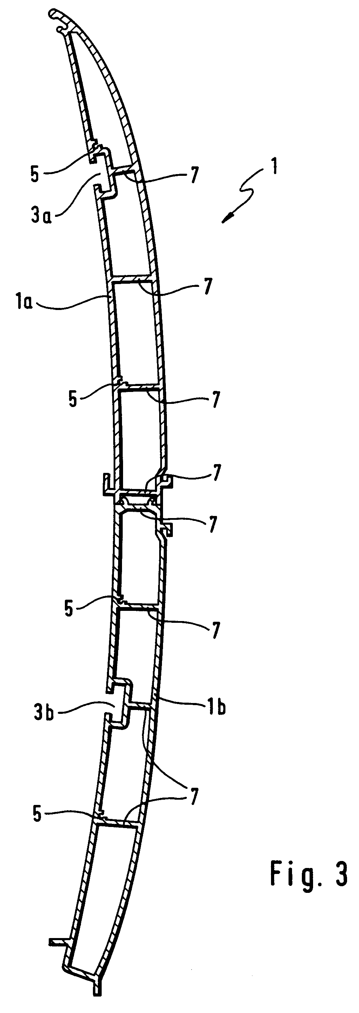

Die Außenhaut der Profilabschnitte 1a, b schließt flächenbündig mit den Seitenteilen 18, 19 ab. Zum Positionieren der Außenschale können die Schanierteile 20a, b sowie das Türschloß 21 in den jeweiligen Nuten verschoben werden. Dies wird anhand der Figur 3 später erläutert.

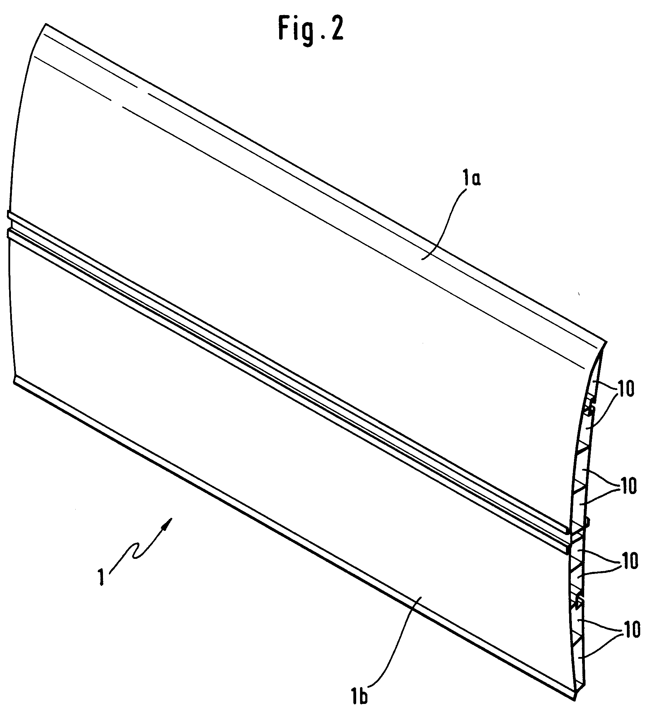

In Figur 2 ist die Außenschale nochmals in perspektivischer Darstellung, aber vergrößert gezeigt. Man erkennt die Hohlkammeröffnungen 10, die zur Versteifung der Außenschale 1a, b beitragen. Es handelt sich um ein zweischaliges Mehrkammerhohlprofil, das gleichzeitig als Sicherheitsbauteil ausgebildet ist.

In Figur 3 ist nochmals vergrößert der Querschnitt der Profilabschnitte 1a, b dargestellt. Man erkennt im Innenbereich der Hohlkammern die Schraubkanäle 5 und die hinterschnittenen Nuten 3a, b sowie die senkrecht zur Außenschale, zwischen Außenhaut und Innenhaut angeordneten Stege 7. Die Nuten 3a, b und die Schraubkanäle 5 dienen der Befestigung der Innenschale bzw. von Anschlußteilen.

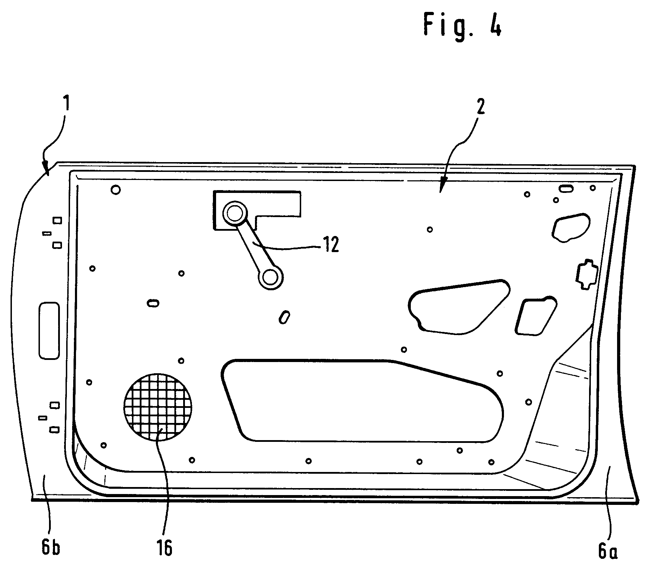

In Figur 4 ist die Innenschale 2 mit der Fensterkurbel 12, dem Lautsprecher 16, sowie den seitlichen Überständen 6a, b dargestellt. Die Überstände 6a, b überdecken den Fahrzeugrahmen bzw. das Türrahmenprofil 18, 22 (Figur 1) und sorgen im Crash-Falle dafür, daß die Außenschale der Tür im Türrahmenprofil verankert bleibt und daher die Insassen des Fahrzeugs vor seitlichen Aufprällen besser geschützt sind.

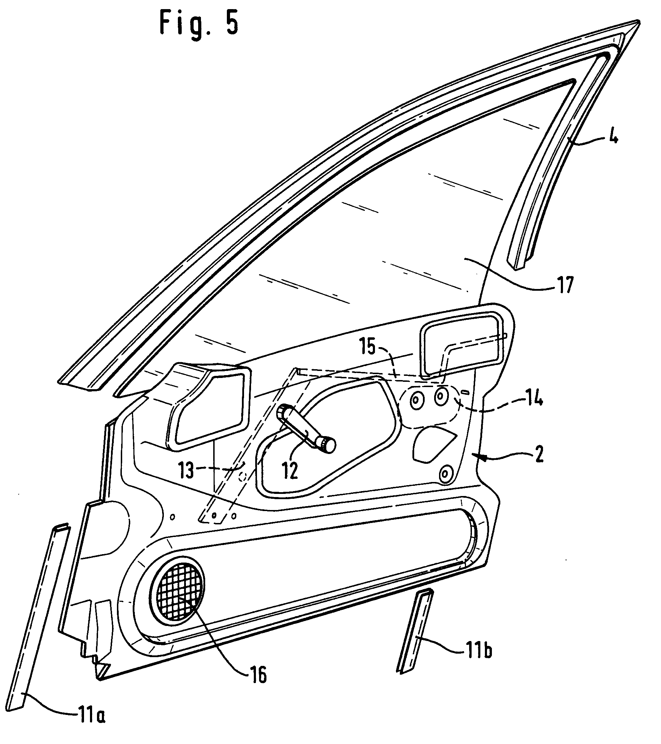

In Figur 5 ist eine um weitere Anbauteile ergänzte Innenschale 2 mit dem Fensterrahmenprofil 4 dargestellt, in dem eine Fahrzeugscheibe 17 gehalten ist. Man erkennt ferner in Explosionsdarstellung die Fensterführungsschienen 11a, b, die Fensterkurbel 12, das Fenstergetriebe 13, die Servomotoren 14 und das Servogetriebe 15. Diese Zubehörteile können in den Funktionsträger vor dem Zusammenbau von Innenschale 2 und Außenschale 1 montiert werden, was zu erheblichen Ersparnissen bei den Fertigungskosten führt.

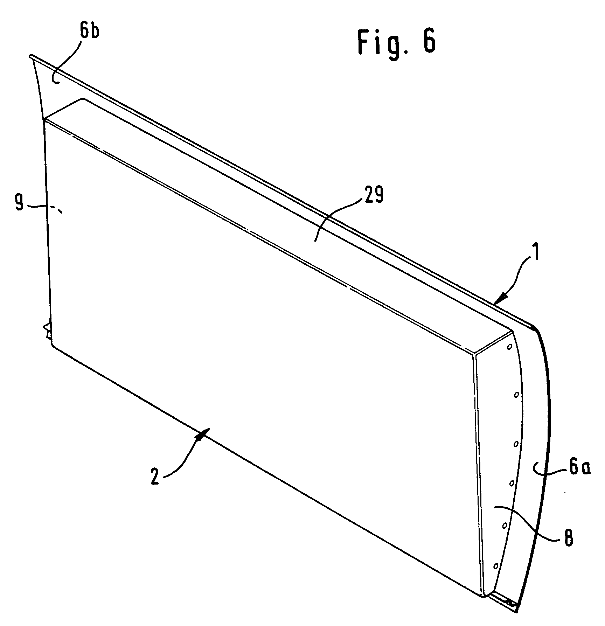

In Figur 6 ist gezeigt, wie die Außenschale 1 mit der Innenschale 2 erfindungsgemäß verbunden ist. Man erkennt die seitlichen Abkantungen 8, 9 an der Innenschale 2 sowie die Überstände 6a, b an der Außenschale 1. Es handelt sich dabei jedoch nur um eine Teildarstellung der gesamten Fahrzeugtür, damit die Funktionsweise beim Zusammenbau der Innenschale und Außenschale erkennbar wird.

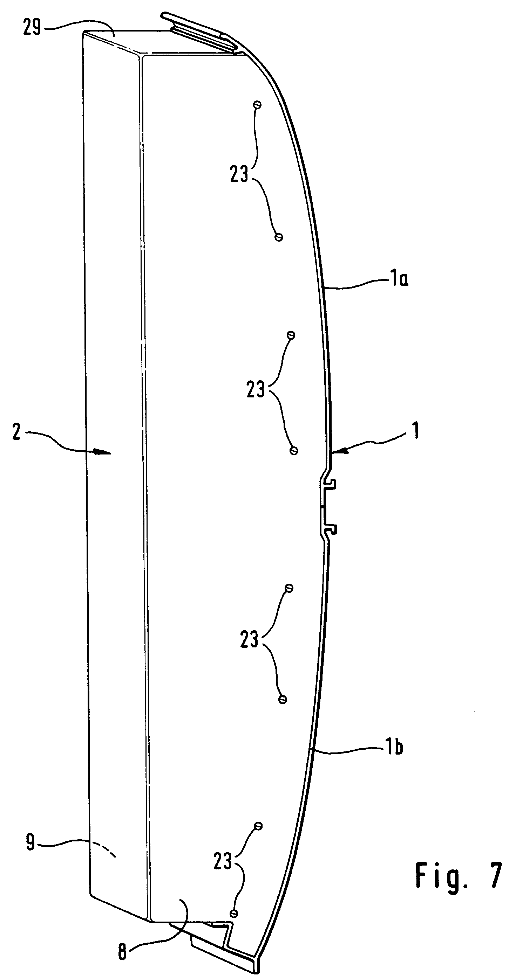

Figur 7 zeigt den Gegenstand nach Figur 6 noch einmal in vergrößerter Darstellung, nämlich ein Segment der erfindungsgemäßen Fahrzeugtür, bestehend aus der Außenschale 1a, b sowie der Innenschale 2, die über Verschraubungen 23 miteinander verbunden sind. Ferner sind die Abkantungen 8 und 9 zu erkennen, die die Hohlräume der Fahrzeugtür seitlich abschließen.

**Patentansprüche**

1. Fahrzeugtür in Zweischalenbauweise, bestehend aus einer Außenschale (1), die flächenbündig mit den übrigen Karosserieteilen im Türrahmenbereich abschließbar ist, einer Innenschale (2), an der eine Innenverkleidung befestigt ist und die mit der Außenschale in der Fahrzeugmontage form- und/oder kraftschlüssig verbunden wird und den für die Tür- bzw. Fensterbedienung erforderlichen Türkomponenten, die in den Türinnenraum, gebildet zwischen Außen- und Innenschale, untergebracht sind, wobei die Außenschale aus selbsttragenden teilweise doppelwandigen oder vollständig doppelwandigen, an den Schmalseiten offenen Profilabschnitten (1a, b) besteht, in die die Türschaniere und das Türschloß befestigbar sind und die aus einem oder mehreren in Fahrzeuglängsrichtung verlaufenden Integralprofilen bestehen, in deren Querschnitt Schraubkanäle und/oder hinterschnittene Nuten (3a, b) zur Befestigung der als Funktionsträger ausgebildeten Innenschale (2) vorgesehen sind, in der die Türkomponenten auswechselbar befestigt sind, und daß die Innenschale zwei hochgestellte Randbereiche oder Abkantungen (8, 9) aufweist, die die aus Hohlkammeröffnungen (10) an den Schmalseiten der als zweischaliges Mehrkammerprofil ausgebildeten Außenschale (1) seitlich verschließen.

2. Fahrzeugtür nach Anspruch 1, dadurch gekennzeichnet, daß die Profilabschnitte (1a,b) aus Aluminiumstrangpreßprofilen bestehen und ein Scheibenrahmen (4) als Strangpreßprofil an der Innenschale (2) befestigt ist.

3. Fahrzeugtür nach einem der vorhergehenden Ansprüche, dadurch gekennzeichnet, daß die Innenschale (2) aus einem oder mehreren Druckgußteilen besteht.

4. Fahrzeugtür nach einem der vorhergehenden Ansprüche, dadurch gekennzeichnet, daß die Anbindung der mit einem Scheibenrahmen (4) ausgestatteten Innenschale (2) in hinterschnittenen Nuten (3) bzw. in Schraubkanälen (5) erfolgt, die in den Strangpreßprofilabschnitten (1a,b) der Außenschale angeordnet sind.

5. Fahrzeugtür nach einem der vorhergehenden Ansprüche, dadurch gekennzeichnet, daß zur Positionierung der Türscharniere in den hinterschnittenen Nuten (3) der Außenschale (1) Nutensteine angeordnet sind, die als mechanische Klemmelemente in der XY-Ebene der Tür verschiebbar und fixierbar angeordnet sind.

6. Fahrzeugtür nach einem der vorhergehenden Ansprüche, dadurch gekennzeichnet, daß seitliche Überstände (6a,b) an der Außenschale sowie an der Innenverkleidung (2) und somit auch an den Profilen (1a,b) vorgesehen sind, die den Türrahmen teilweise überlappen.

7. Fahrzeugtür nach einem der vorhergehenden Ansprüche, dadurch gekennzeichnet, daß die Strangpreßprofilabschnitte (1a,b) als Mehrkammerhohlprofile ausgebildet sind, die in Fahrtrichtung verlaufende, senkrecht zur Außenschale angeordnete, nach innen weisende Stege (7) aufweisen.

8. Fahrzeugtür nach einem der vorhergehenden Ansprüche, dadurch gekennzeichnet, daß als Strangpreßlegierung eine Aluminiumlegierung der 6000-Serie verwendet wird.

9. Fahrzeugtür nach einem der vorhergehenden Ansprüche, dadurch gekennzeichnet,

daß die Innenschale (2) aus einem oder mehreren tiefgezogenen Blechen besteht.

10. Fahrzeugtür nach Anspruch 9,
dadurch gekennzeichnet,
daß die Innenschale (2) aus einem oder mehreren Kunststoffspritzgußteilen oder faserverstärkten Kunststoffteilen besteht.

11. Fahrzeugtür nach Anspruch 9,
dadurch gekennzeichnet,
daß die Innenschale (2) aus einem Kunststoff-, Profil- oder Blechteil besteht oder in Gußmischbauweise hergestellt ist.

**Claims**

1. A vehicle door of the double shell type, consisting of an outer shell (1) which is closable so as to be surface-flush with the remaining body parts in the region of the door frame, of an inner shell (2) to which there is secured an inner lining and which, during vehicle assembly, is form-fittingly and/or force-lockingly connected to the outer shell, and of the door components which are required for operating the door and window and which are accommodated in the door interior formed between the outer shell and inner shell, with the outer shell consisting of self-supporting, partially double-walled or fully double-walled profiled portions (1a, b) which are open at the narrow ends and in which the door hinges and the door lock are securable and which consist of one or more integral profiles which extend in the longitudinal direction of the vehicle and in whose cross-sections there are provided threaded channels and/or undercut grooves (3a, b) for fixing the inner shell (2) which is provided in the form of a functional carrier and in which the door components are replaceably secured, and that the inner shell comprises two upright edge regions or chamfers (8, 9) which laterally close the hollow chamber openings (10) at the narrow ends of the outer shell (1) provided in the form of a double-shell multi-chamber profile.

2. A vehicle door according to claim 1,
characterized in
that the profiled portions (1a, b) consist of extruded aluminium profiles and that a disc frame (4) is secured to the inner shell (2) in the form of an extruded profile.

3. A vehicle door according to any one of the preceding claims,
characterised in
that the inner shell (2) consists of one or more die-castings.

4. A vehicle door according to any one of the preceding claims,
characterised in
that the inner shell (2) provided with a disc frame (4) is connected in undercut grooves (3) and threaded channels (5) respectively, which are arranged in the extruded profiled portions (1a, b) of the outer shell.

5. A vehicle door according to any one of the preceding claims,
characterised in
that for the purpose of positioning the door hinges in the undercut grooves (3) of the outer shell (1), there are arranged groove blocks which, in the form of mechanical clamping elements, are movably and fixably arranged in the XY-plane of the door.

6. A vehicle door according to any one of the preceding claims,
characterised in
that at the outer shell and at the inner shell (2) and also at the profiles (1a, b), there are provided side projections (6a, b) which partially overlap in the door frame.

7. A vehicle door according to any one of the preceding claims,
characterised in
that the extruded profiled portions (a, b) are provided in the form of multi-chamber hollow profiles comprising inwardly pointing webs (7) which extend in the direction of driving and are arranged perpendicularly relative to the outer shell.

8. A vehicle door according to any one of the preceding claims,
characterised in
that the extrusion alloy is an aluminium alloy of the 6000 series.

9. A vehicle door according to any one of the preceding claims,
characterised in
that the inner shell (2) consists of one or more deep-drawn plates.

10. A vehicle door according to claim 9,
characterised in
that the inner shell (2) consists of one or more plastic injection moulded parts or fibre-reinforced plastic parts.

11. A vehicle door according to claim 9,
characterised in
that the inner shell (2) consists of a plastic, profiled or plate metal part or is produced by a mixed casting method.

## Revendications

1. Porte de véhicule du genre à double paroi, constituée par une paroi extérieure (1) qui peut se terminer dans l'alignement des autres parties de la carrosserie dans la région du châssis de la porte, par une paroi intérieure (2) à laquelle est fixé un habillage intérieur et qui est reliée à la paroi extérieure par conjugaison des formes et/ou des forces lors du montage du véhicule, et par les éléments constitutifs de la porte qui sont nécessaires pour la manoeuvre de la porte ou de la fenêtre, respectivement, et qui sont logés dans le volume intérieur de la porte formé entre la paroi extérieure et la paroi intérieure, cependant que la paroi extérieure est constituée par des parties de profilé autoportantes (1a, b), partiellement à double paroi ou complètement à double paroi, qui sont ouvertes sur leurs petits côtés, dans lesquelles les charnières de porte et la serrure de porte peuvent être fixées et qui sont constituées par un ou plusieurs profilés d'un seul tenant s'étendant dans la direction longitudinale du véhicule dans la section transversale desquels sont prévus des canaux de vissage et/ou des rainures à contre-dépouille (3a, b) pour la fixation de la paroi intérieure (2) qui est réalisée sous la forme d'un support d'organes fonctionnels et dans laquelle les éléments constitutifs de la porte sont fixés de manière à pouvoir être remplacés, et que la paroi intérieure présente deux zones de bord rabattues ou rebords (8, 9) qui ferment latéralement des ouvertures de cavités (10) sur les petits côtés de la paroi extérieure (1), laquelle est réalisée sous la forme d'un profilé à deux parois et à plusieurs chambres.

2. Porte de véhicule selon la revendication 1, caractérisée par le fait que les parties de profilé (1a, b) sont constituées par des profilés extrudés en aluminium, et qu'un châssis de fenêtre (4) réalisé sous la forme d'un profilé extrudé est fixé à la paroi intérieure (2).

3. Porte de véhicule selon l'une des revendications précédentes, caractérisée par le fait que la paroi intérieure (2) est constituée par une ou plusieurs pièces moulées sous pression.

4. Porte de véhicule selon l'une des revendications précédentes, caractérisée par le fait que la fixation de la paroi intérieure (2) équipée d'un châssis de fenêtre (4) a lieu dans des rainures à contre-dépouille (3) ou dans des canaux de vissage (5), respectivement, qui sont disposés dans les parties de profilé extrudé (1a, b) de la paroi extérieure.

5. Porte de véhicule selon l'une des revendications précédentes, caractérisée par le fait qu'en vue du positionnement des charnières de porte, des coulisseaux sont disposés dans les rainures à contre-dépouille (3) de la paroi extérieure (1), et qu'ils servent d'éléments mécaniques de serrage en pouvant être déplacés dans le plan XY de la porte et en pouvant être fixés.

6. Porte de véhicule selon l'une des revendications précédentes, caractérisée par le fait que des parties en saillie latérales (6a, b) sont prévues sur la paroi extérieure, ainsi que sur l'habillage intérieur (2), et donc aussi sur les profilés (1a, b), en recouvrant partiellement le châssis de porte.

7. Porte de véhicule selon l'une des revendications précédentes, caractérisée par le fait que les parties de profilé extrudé (1a, b) sont réalisées sous la forme de profilés creux à plusieurs chambres présentant des ailes (7) qui s'étendent dans la direction de la marche, qui sont disposées perpendiculairement à la paroi extérieure et qui sont dirigées vers l'intérieur.

8. Porte de véhicule selon l'une des revendications précédentes, caractérisée par le fait que l'on utilise comme alliage extrudé un alliage d'aluminium de la série 6000.

9. Porte de véhicule selon l'une des revendications précédentes, caractérisée par le fait que la paroi intérieure (2) est constituée par une ou plusieurs tôles embouties.

10. Porte de véhicule selon la revendication 9, caractérisée par le fait que la paroi intérieure (2) est constituée par une ou plusieurs pièces en matière plastique moulées par injection ou par des pièces en matière plastique renforcées par des fibres.

11. Porte de véhicule selon la revendication 9, caractérisée par le fait que la paroi intérieure (2) est constituée par une pièce en matière plastique, une pièce profilée ou une pièce en tôle, ou qu'elle est fabriquée selon un mode d'élaboration par coulée mixte.

Fig. 1

# Fig.2

Fig. 3

Fig. 4

Fig. 5

# Fig. 6

Fig. 7